# EUROPEAN PATENT SPECIFICATION

(11) **EP 0 365 161 B1**
(45) Date of publication and mention of the grant of the patent: **20.01.1993**
(21) Application number: 89309909.3
(22) Date of filing: 28.09.1989
(51) Int. Cl.: F16B 19/00, F16B 21/08

(54) **Push-in fastener**
Eindrückbares Befestigungsmittel
Dispositif de fixation à emboîtement

(30) Priority: 06.10.1988 US 254405
(43) Date of publication of application: 25.04.1990
(73) Proprietor: TRW INC., Cleveland Ohio 44124 (US)
(72) Inventor: Lewis, Jeffrey Charles, Massachusetts 01452 (US)
(74) Representative: Abbie, Andrew Kenneth

(56) References cited:
- DE-A- 1 945 377
- FR-A- 2 417 444
- US-A- 3 810 279
- US-A- 4 396 329
- US-A- 4 728 238

## Description

The invention relates to a fastener of the type generally referred to as "push-in" or "drive" fastener.

"Push-in" or "drive" fasteners of a variety of types and styles are well known in the art. Typically, as shown in US-A-4,396,329 and US-A-4,728,238 they are arranged to be driven axially into preformed openings in a work piece and to engage therein by virtue of laterally extending flexible tabs, or wing means.

An ongoing problem with such fasteners has been the relationship between the installation or insertion forces and the removal forces. Ideally, it would be desirable in many situations to have a design wherein the insertion forces are extremely low and the removal forces extremely high. In the case of the fasteners of the aforementioned US specifications, these forces were generally nearly equal. Attempts to reduce the forces resisting installation while increasing the forces resisting removal by changing the shape of the wing means, their angle of inclination, or their manner of connection to the fastener shank have generally been of marginal value.

Specification FR-A-2417444 discloses a plastics tie having at one end thereof a push-in fastener portion insertable into an opening of a socket at the other end of the tie. This push-in fastener portion comprises a shank having a longitudinal axis, said shank having flexible wing means extending generally laterally thereof and away from a leading end. The fastener portion once inserted into the socket opening is removable by application of a removal force to the push-in fastener portion above a predetermined value, which may be greater than the force needed to push the fastener portion through the socket opening, and which causes shearing of the wing means. This shearing will occur through a portion of the wing means of reduced thickness.

An object of the present invention is to provide a push-in fastener which requires application of a low force for installation in a preformed opening of a workpiece and a significantly higher force for removal therefrom wherein a removal force for shearing through the wing means acts on a portion of the wing means having a maximum thickness.

Accordingly, there is provided a push-in fastener comprising a shank having a longitudinal axis, said shank having flexible wing means extending generally laterally thereof and away from a leading end of the shank and abutment means for limiting the flexure movement of the wing means towards said leading end characterized in that said abutment means is provided with a stop surface for abutting a corresponding stop surface of the wing means provided on a portion of the wing means of maximum thickness in a line which is parallel to the longitudinal axis of said shank when said wing means is in a position of maximum lateral extent.

Preferably said wing means comprises a plurality of wing members spaced axially on said shank and said abutment means comprises a plurality of rigid projections extending outwardly from said shank, each rigid projection being disposed adjacent a respective wing member for limiting said flexure thereof.

The fastener may include a series of said wing members and said rigid projections spaced in axial alignment along said shank. In this case there may be at least two said aligned series and one of said aligned series may be axially offset from at least one other said aligned series.

Preferably, the wing members are relatively rigid and inflexible and each wing member is connected to said shank by a respective hinge means in the form of a thin web, which web is relatively flexible and resilient.

In two embodiments of the invention described hereinafter the shank has a substantially rectangular cross-sectional shape in planes perpendicular to said longitudinal axis, and each hinge means and a terminal end of each wing member extends parallel to a side of the shank.

In order that the invention may be well understood the above-mentioned embodiments thereof, which are given by way of example only, will now be described in more detail, reference being made to the accompanying drawings, in which:
Figure 1 is a side elevational view of a push-in fastener;
Figure 2 is a view taken on line 2-2 of Figure 1;
Figure 3 is an end view taken on line 3-3 of Figure 2;
Figure 4 is a partial side elevational view similar to Figure 1 but showing the fastener being inserted into a preformed opening in a workpiece;
Figure 5 is a view like Figure 4 but showing the fastener fully installed and axial withdrawal forces being applied thereto;
Figure 6 is an enlarged partial side elevational view showing the wing members and associated abutment means in detail;
Figure 7 is a side elevational view of another push-in fastener; and
Figure 8 is a view taken on line 8-8 of Figure 7.

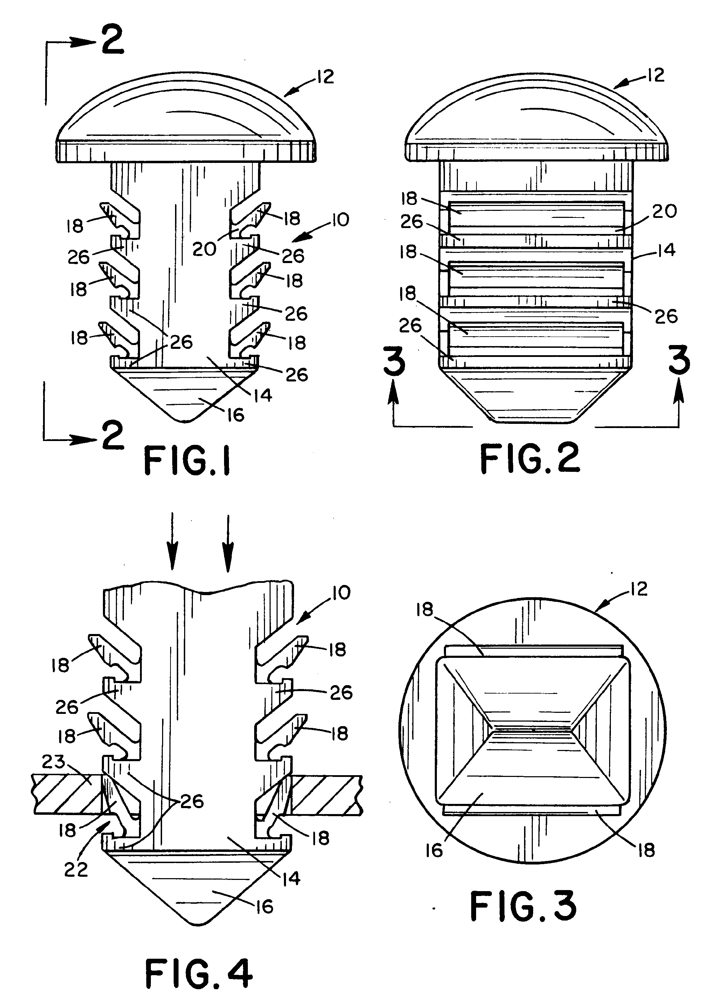

Referring more particularly to the drawings, Figure 1 shows the overall construction of a one piece, push-in or drive type fastener 10. The fastener 10 is preferably injection molded from a plastics material and comprises an enlarged head portion 12 which has a relatively rigid elongate shank 14 extending axially therefrom. The shank terminates in a free or leading end 16 which preferably has a tapered or pyramidal shape as shown. The head portion 12 is illustrated as being an enlarged, somewhat dome shaped head member having a radial extent significantly greater than the transverse dimensions of the shank 14. It should be apparent, however, the head portion can be of any of a multiple number of styles or shapes, or it could comprise a separate component such as a wiring harness, fuel line clamp, or a separate structural element. Consequently, the term head portion merely refers to some component to which the shank 14 is connected for the purpose of joining such component to a workpiece.

The fastener 10 is specifically arranged and intended for insertion in a preformed opening of a predetermined size in a workpiece. In the particular embodiments illustrated the shank 14 is of a generally rectangular cross-sectional shape in planes perpendicular to its longitudinal axis, and accordingly, is intended to preferably be used in a rectangular opening 22 as illustrated in Figure 4. The shank 14, for reasons which will subsequently become apparent, is sized so that it is freely receivable in the performed opening with which the fastener is intended to be used.

Associated with the shank 14 are a plurality of wing members 18 which, as shown in Figure 2, extend substantially completely across the opposite side faces of shank 14. The wing members 18 extend laterally from the shank 14 and are preferably inclined assay from the leading end and toward the head portion 12 as illustrated. Each of the wing members 18 is preferably formed integrally with the shank 14 and is connected thereto by a hinge means in the form of a relatively flexible and resilient web portion 20 which is arranged to permit the associate wing member to have the ability to flex toward and away from the head portion 12 in directions axially of the shank 14, but prevent flexure in directions transverse to the longitudinal axis of the shank.

As best illustrated in Figure 4, the wing members 18 have a maximum lateral extent in their normal or unflexed position which is significantly greater than the spacing of the lateral sides of the preformed opening 22 in workpiece 23. In addition, it should be noted that the wing members are preferably positioned in sets, each of which comprise a series of wing members which are axially aligned and spaced along the length of the shank 14. During installation of the fastener 10 having two such sets(as shown in Fig 4) in the preformed opening 22 the individual wing members 18 in each of the two sets must be deflected and flexed axially of the shank 14 in a direction toward the head portion 12. As noted earlier, the rigid shank 14 must have a cross-section which is smaller than the cross-section of the opening 22. During insertion of the fastener 10, the wing members 18 are successively deflected away from the leading end 16 and toward the head 12 as the fastener is driven through the opening 22. Once the fastener has been driven to the desired depth as dictated by the thickness of the workpiece and the thickness of any additional member being connected between the head and the top of the workpiece, the fastener cannot be withdrawn from the opening 22 unless the wing members are deflected in a reverse direction toward the free end 16.

The general overall arrangement thus far described is typical of many prior art push-in type fasteners. The general arrangement is illustrated, for example, in US-A-3,810,279 and US-A-4,728,238. As can be appreciated, the force required to insert such fasteners is closely related to the force required to deflect the wing members 18. Similarly, the forces resisting withdrawal or removal of the fastener are likewise normally related directly to the force required to flex the wing members toward the free end of the shank.

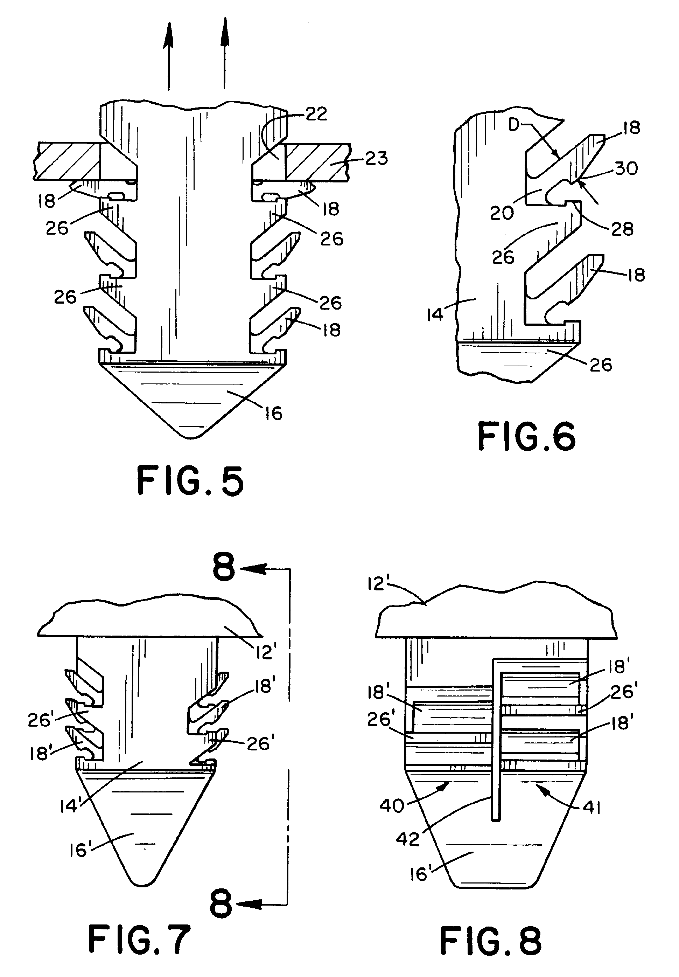

The fastener 10 further comprises abutment means 26 which engage the wing members at a point outwardly of the shank when an attempt is made to bend or flex the wing members in a direction toward the leading end of the shank. Specifically, each of the wing members 18 has an abutment means in the form of a rigid projection 26 associated therewith. As shown in Figure 1, a rigid projection 26 is located adjacent each of the wing members 18 at a location such that an attempt to flex the associated wing member toward the leading end of the shank causes engagement between a stop surface 28 of the rigid projection and a stop surface 30 of the wing member to prevent such flexure beyond a limit point located approximately at the location wherein the wing members have their maximum lateral extent. Preferably, as illustrated in Figure 6, each of the rigid projections 26 is formed integrally with the shank 14 and has a lateral extent less than the periphery of the preformed opening 22 in which the fastener is intended to be installed. That is, the rigid projections do not interfere with insertion of the fastener into the preformed opening.

The rigid projections 26 have an inclined lower face and are shaped to have substantial rigidity against axial flexure. A stop surface 28 is located on the upper face of each rigid projection 26 for abutting a corresponding stop surface 30 formed on the undersite of each of the wing members 18. As noted earlier, the wing members 18 are preferably provided with a web section 20 to allow them to have significant flexibility in directions axially of the shank 14. By varying the thickness of the web section 20 this flexibility can be varied. As will be apparent from Figs 5 and 6, the stop surface 30 of each wing member 18 is provided on a portion of the wing member of maximum thickness D in a line which is parallel to the longitudinal axis of the shank when the wing member is in a position of maximum lateral extent. Therefore additionally, by varying the thickness D of the wing member 18 the ability of the wing to resist shearing forces encountered during attempted extraction of the fastener can be varied. It should also be recognized that the underface of the rigid projections 26 and the upper face of the wing members 18 of an axially aligned series of wing members and rigid projections are designed and related such that the wing member 18 can flex freely in a direction toward the head portion such that they lie within the maximum radial extent of the abutment members 26. This permits the insertion operation to take place as shown in Figure 4.

Figure 5 illustrates the push-in fastener 10 when an attempt is made to withdraw it from the preformed opening 22. As illustrated therein the wing members 18 which are adjacent the workpiece 23 are caused to engage on the underside of the workpiece. During this engagement they are flexed in a direction toward the free end 16.

When this flexure movement has brought the engaging wing members 18 to a position of maximum lateral extent, the stop surfaces 30 of these wing members abut with the corresponding stop surfaces 28 of respective rigid projections 26 thereby preventing further flexure movement. Since further flexure movement is prevented the withdrawal of the fastener can take place only by shearing the wing member 18 through a portion thereof of maximum thickness D. By varying this thickness it is, of course, possible to vary the forces to which the fastener must be subjected to produce fastener extraction. As is apparent the resulting fastener thus can have a widely varying difference in the relationship between installation forces and extraction forces. More particularly, as noted, these forces can be selectively varied merely by varying the thickness of the hinge or web portion 20 and the wing dimension D respectively.

Referring to Figures 7 and 8, a further embodiment of the push-in fastener is illustrated which is similar to the push-in fastener of the previously described embodiment. According like reference numerals differentiated by a prime (′) suffix have been used to identify like or similar parts and the description of a Figure 1 through 4 part is to be considered as equally applicable to the corresponding part of Figures 7 and 8 unless otherwise noted. In particular, the embodiment of Figures 7 and 8 is arranged to allow the fastener to be able to tightly engage and hold a wider range of workpiece thickness. In this regard, the Figures 7 and 8 embodiment provides two series of wing members 18′ and rigid projections 26′ on each opposed face of the shank 14′. More particularly, as shown in Figure 8, a first series 40 extends along the left hand side of the illustrated face and a second series 41 extends along the right hand side. The two series 40 are separated by a vertical groove 42. As noted, the left hand series of wing members 18′ and rigid projections 26′ are axially offset a small amount from the right hand series 41. The opposed face of the shank 14′ similarly includes an axially offset series of wing members and rigid projections. Preferably, the offset is such that the wing members of one series are intermediate those of the adjacent series on the same side of the shank. Preferably, each series 40, 41 is in alignment with one of the series on the opposed face. Thus, irrespective of the particular thickness of the workpiece, relatively firm engagement can be achieved because of the close variation in positions of the wing members from the undersurface of the head portion 12′.

The embodiments have been described in great detail sufficient to enable one of ordinary skill in the art to make and use the same. Obvious modifications and alterations will occur to others upon a reading and understanding of the subject specification. It is intended to include all such modifications and alterations as part of the invention insofar as they come within the scope of the appended claims

## Claims

1. A push-in fastener (10; 10′) comprising a shank (14; 14′) having a longitudinal axis, said shank having flexible wing means (18; 18′) extending generally laterally thereof and away from a leading end (16; 16′) of the shank and abutment means (26; 26′) for limiting the flexure movement of the wing means towards said leading end characterized in that said abutment means is provided with a stop surface (28) for abutting a corresponding stop surface (30) of the wing means provided on a portion of the wing means of maximum thickness (D) in a line which is parallel to the longitudinal axis of said shank when said wing means is in a position of maximum lateral extent.

2. A push-in fastener as claimed in claim 1 wherein said wing means comprises a plurality of wing members (18; 18′) spaced axially on said shank and said abutment means comprises a plurality of rigid projections (26; 26′) extending outwardly from said shank, each rigid projection being disposed adjacent a respective wing member for limiting said flexure thereof.

3. A push-in fastener as claimed in claim 2 wherein said fastener includes a series of said wing members and said rigid projections spaced in axial alignment along said shank.

4. A push-in fastener as claimed in claim 3 wherein said fastener includes at least two said aligned series.

5. A push-in fastener as claimed in claim 4 wherein one said aligned series is axially offset from at least one other said aligned series.

6. A push-in fastener as claimed in any one of claims 2 to 5, wherein said wing members (18; 18′) are relatively rigid and inflexible and each wing member is connected to said shank (14; 14′) by a respective hinge means (20) in the form of a thin web, which web is relatively flexible and resilient.

7. A push-in fastener as claimed in claim 6 wherein said shank has a substantially rectangular cross-sectional shape in planes perpendicular to said longitudinal axis and wherein each hinge means and a terminal end of each wing member extends parallel to a side of the shank.

8. A push-in fastener as claimed in claim 6 and 7 wherein said hinge means (20) permit said wing members to flex in directions axially of said shank but prevent flexure in directions transverse to a longitudinal axis of the shank.

9. A push-in fastener as claimed in claim 6, 7 or 8, wherein said rigid projections engage said respective wing members at locations laterally of said hinge means.

10. A push-in fastener as claimed in any one of claims 2 to 9, wherein said rigid projections have a maximum lateral extent substantially less than the maximum lateral extent of said wing members.

11. A push-in fastener as claimed in any one of claims 2 to 10 wherein said rigid projections have a lateral extent less than the periphery of a preformed opening in which said fastener is intended to be installed.

12. A push-in fastener as claimed in claim 11 wherein said rigid projections engage said wing members between said hinge means and the periphery of said opening when said fastener is installed therein.

## Patentansprüche

1. Eindrückbares Befestigungsmittel (10; 10′) mit einem Schaft (14; 14′) mit einer Längsachse, wobei der Schaft biegsame Flügel (18; 18′) aufweist, die sich im allgemeinen seitlich vom Schaft und von einem vorderen Ende (16; 16′) des Schafts weg erstrecken, und mit Anschlägen (26, 26′) zur Begrenzung der Biegebewegung der Flügel zum vorderen Ende hin,
dadurch gekennzeichnet, daß
die Anschläge eine Anschlagfläche (28) zur Anlage an einer entsprechenden Anschlagfläche (30) der Flügel besitzen, die an einem Flügelbereich von maximaler Dicke (D) in einer Linie vorgesehen ist, die parallel zur Längsachse des Schafts ist, wenn sich die Flügel in einer Stellung befinden, in der sie eine maximale seitliche Ausdehnung besitzen.

2. Eindrückbares Befestigungsmittel nach Anspruch 1, dadurch gekennzeichnet daß die Flügel eine Anzahl von Flügelelementen (18, 18′) aufweisen, die auf dem Schaft axial voneinander beabstandet angeordnet sind, und daß die Anschläge eine Anzahl von starren Vorsprüngen (26, 26′) aufweisen, die sich vom Schaft nach außen erstrecken, wobei jeder starre Vorsprung neben einem entsprechenden Flügelelement angeordnet ist, um dessen Biegung zu begrenzen.

3. Eindrückbares Befestigungsmittel nach Anspruch 2, gekennzeichnet durch eine Reihe von Flügelelementen und starren Vorsprüngen, die entlang dem Schaft axial fluchtend voneinander beabstandet angeordnet sind.

4. Eindrückbares Befestigungsmittel nach Anspruch 3, gekennzeichnet durch mindestens zwei fluchtende Reihen.

5. Eindrückbares Befestigungsmittel nach Anspruch 4, dadurch gekennzeichnet, daß eine der fluchtenden Reihen von mindestens einer weiteren fluchtenden Reihen axial versetzt ist.

6. Eindrückbares Befestigungsmittel nach einem der Ansprüche 2 bis 5, dadurch gekennzeichnet, daß die Flügelelemente (18; 18′) verhältnismäßig starr und unbiegsam sind und daß jedes Flügelelement mit dem Schaft (14; 14′) durch ein entsprechendes Scharnier (20) in Form eines dünnen Stegs verbunden ist, der verhältnismäßig biegsam und elastisch ist.

7. Eindrückbares Befestigungsmittel nach Anspruch 6, dadurch gekennzeichnet, daß der Schaft in den Ebenen, die senkrecht zu seiner Längsachse sind, einen im wesentlichen rechteckigen Querschnitt besitzt und daß jedes Scharnier und ein Abschlußende jedes Flügelelements sich parallel zu einer Schaftseite erstrecken.

8. Eindrückbares Befestigungsmittel nach Anspruch 6 und 7, dadurch gekennzeichnet, daß das Scharnier (20) eine Biegung der Flügelelemente in Axialrichtung des Schaftes ermöglicht, aber eine Biegung in eine Richtung quer zur Längsachse des Schafts verhindert.

9. Eindrückbares Befestigungsmittel nach Anspruch 6, 7 oder 8, dadurch gekennzeichnet, daß die starren Vorsprünge in die entsprechenden Flügelelemente an Stellen seitlich des Scharniers eingreifen.

10. Eindrückbares Befestigungsmittel nach einem der Ansprüche 2 bis 9, dadurch gekennzeichnet, daß die maximale seitliche Ausdehnung der starren Vorspringe im wesentlichen geringer ist als die maximale seitliche Ausdehnung der Flügelelemente.

11. Eindrückbares Befestigungsmittel nach einem der Ansprüche 2 bis 10, dadurch gekennzeichnet, daß die seitliche Ausdehnung der starren Vorsprünge geringer ist als der Umfang einer vorgeformten Öffnung, die zum Einbau des Befestigungsmittels vorgesehen ist.

12. Eindrückbares Befestigungsmittel nach Anspruch 11, dadurch gekennzeichnet, daß die starren Vorsprünge die Flügelelemente zwischen dem Scharnier und dem Umfang der Öffnung bei Einbau des Befestigungsmittels darin beaufschlagen.

## Revendications

1. Dispositif de fixation à emboîtement (10 ; 10′) comprenant une tige (14 ; 14′) ayant un axe longitudinal, cette tige comportant des ailettes souples (18 ; 18′) s'étendant de façon générale latéralement par rapport à celle-ci et s'éloignant d'une extrémité d'attaque (16 ; 16′) de la tige et des moyens de butée (26, 26′) servant à limiter le mouvement de flexion des éléments ailette vers l'extrémité d'attaque, caractérisé en ce que des moyens de butée sont munis d'une surface d'arrêt (28) pour la mise en appui ou en butée d'une surface d'arrêt correspondante (30) des moyens d'ailette prévue sur une portion des moyens d'ailette d'épaisseur maximum (D) dans une ligne parallèle à l'axe longitudinal de la tige lorsque les moyens d'ailette sont dans une position d'extension latérale maximum.

2. Dispositif de fixation à emboîtement selon la revendication 1, dans lequel les moyens d'ailette comprennent une pluralité d'éléments d'ailette (18 ; 18′) espacés axialement sur la tige et les moyens de butée comprennent une pluralité de saillies (26 ; 26′) s'étendant vers l'extérieur à partir de la tige, chaque saillie rigide étant disposée de façon contiguë à un élément d'ailette respectif pour limiter sa flexion.

3. Elément de fixation à emboîtement selon la revendication 2, dans lequel l'élément de fixation comprend une série d'éléments d'ailette et les projections rigides espacées en alignement axial le long de cette tige.

4. Elément de fixation à emboîtement selon la revendication 3, dans lequel l'élément de fixation comprend au moins deux séries alignées.

5. Dispositif de fixation à emboîtement selon la revendication 4, dans lequel une série alignée est décalée axialement par rapport au moins à une autre série alignée.

6. Elément de fixation à emboîtement selon l'une quelconque des revendications 2 à 5, dans lequel les éléments d'ailette (18 ; 18′) sont relativement rigides et inflexibles et chaque élément d'ailette est relié à la tige (14 ; 14′) par un moyen d'articulation respectif (20) sous forme d'une bande de faible épaisseur, laquelle bande est relativement souple et élastique.

7. Elément de fixation à emboîtement selon la revendication 6, dans lequel la tige a une forme en section transversale sensiblement rectangulaire dans des plans perpendiculaires à l'axe longitudinal et dans lequel chaque articulation et une extrémité terminale de chaque élément d'ailette s'étendent parallèlement à un côté de la tige.

8. Elément de fixation à emboîtement selon les revendications 6 et 7, dans lequel l'articulation (20) permet de fléchir les éléments d'ailette dans des directions axialement par rapport à la tige mais empêche la flexion dans les directions transversalement à un axe longitudinal de la tige.

9. Elément de fixation à emboîtement selon les revendications 6, 7 ou 8, dans lequel les saillies rigides coopèrent avec des éléments d'ailette respectifs en des emplacements latéralement au moyen d'articulation.

10. Elément de fixation à emboîtement selon l'une quelconque des revendications 2 à 9, dans lequel les saillies rigides ont une extension latérale maximum sensiblement inférieure à l'extension latérale maximum des éléments d'ailette.

11. Elément de fixation à emboîtement selon l'une quelconque des revendications 2 à 10, dans lequel les saillies rigides ont une extension latérale inférieure à la périphérie d'une ouverture préformée dans laquelle doit être monté l'élément de fixation.

12. Elément de fixation à emboîtement selon la revendication 11, dans lequel les saillies rigides coopèrent avec les éléments d'ailettes entre les moyens d'articulation et la périphérie de l'ouverture lorsque l'élément de fixation y est monté.
